# EUROPEAN PATENT APPLICATION

(11) **EP 4 428 975 A1**
(43) Date of publication of application: **11.09.2024**
(21) Application number: 23784126.7
(22) Date of filing: 07.03.2023
(51) Int. Cl.: H01M 10/0525, H01M 4/04

(54) **NEGATIVE PLATE AND LITHIUM-ION BATTERY**

(30) Priority: 07.04.2022 CN 202210360693
(71) Applicant: Zhuhai CosMX Battery Co., Ltd., Zhuhai, Guangdong 519180 (CN)
(72) Inventor: ZHANG, Baohai, Zhuhai, Guangdong 519180 (CN); PENG, Chong, Zhuhai, Guangdong 519180 (CN); LI, Junyi, Zhuhai, Guangdong 519180 (CN)
(74) Representative: Bandpay & Greuter
(86) International application number: PCT/CN2023/080005
(87) International publication number: WO 2023/193562

(57) **Abstract**

Embodiments of the present disclosure relate to the technical field of batteries, in particular to a negative electrode sheet and a lithium-ion battery, for solving the technical problem that a lithium precipitation phenomenon is easy to occur in a functional layer having mixed graphite particles and silicon particles, which affects the endurance and service life of the lithium-ion battery. The negative electrode sheet includes a negative current collector, where a first negative electrode film layer is attached to a surface of the negative current collector, and an active substance of the first negative electrode film layer includes silicon particles and hard carbon particles; a second negative electrode film layer is attached to a surface of the first negative electrode film layer, and an active substance of the second negative electrode film layer includes graphite particles, such that when lithium-ions move to the negative electrode sheet, part of lithium-ions are first embedded into the second negative electrode film layer, and the remaining lithium-ions are embedded into the first negative electrode film layer, thereby lowering the lithium precipitation. Meanwhile, the hard carbon particles can improve the dynamic performance of lithium-ion battery, therefore improving the charging speed of the lithium-ion battery, and solving the technical problem in the related technologies that the fast charging capacity of lithium-ion battery is reduced.

## Description

### CROSS-REFERENCE TO RELATED APPLICATION

The present application claims priority to Chinese Patent Application No. 202210360693.X, entitled with "NEGATIVE ELECTRODE SHEET AND LITHIUM-ION BATTERY", filed with the China National Intellectual Property Administration (CNIPA) on April 7, 2022, the disclosures of which are incorporated in the present application by reference in their entireties.

### TECHNICAL FIELD

The present disclosure relates to the field of battery technology, and in particular, a negative electrode sheet and a lithium-ion battery.

### BACKGROUND

In recent years, with the explosive growth of sales of portable electronic product, lithium-ion batteries have become the power source for various devices. In related technologies, the lithium-ion battery includes a positive electrode sheet, a negative electrode sheet, a separator and an electrolyte solution, and the negative electrode sheet includes a metal sheet and a functional layer covered on the metal sheet, where the functional layer is formed from graphite particles and silicon particles by mixing.

However, in the charging and discharging process of lithium-ion battery, the fast charging ability of lithium-on battery with a functional layer that is formed by mixing graphite particles and silicon particles is reduced, affecting the charging and discharging performance of lithium-ion battery under high current charging and discharging.

### SUMMARY

An embodiment of the present disclosure provides a negative electrode sheet, a lithium-ion battery, and a method of preparing the negative electrode sheet, for solving the technical problem of the reduction of fast charging capacity of lithium-ion in the related technologies.

The solution to solve the above technical problem in an embodiment of the present disclosure is as follows.

A negative electrode sheet, includes:
a negative current collector;
a first negative electrode film layer attached to a surface of the negative current collector, an active substance of the first negative electrode film layer including silicon particles and hard carbon particles, and the first negative electrode film layer including a lithium supplement agent;
a second negative electrode film layer attached to a surface of the first negative electrode film layer, an active substance of the second negative electrode film layer including graphite particles.

Beneficial effects of an embodiment of the present disclosure are as follows. The first negative electrode film layer and the second negative electrode film layer are disposed successively on the surface of the negative current collector, that is, the first negative electrode film layer is attached to the surface of the negative current collector, the second negative electrode film layer is attached to the surface of the first negative electrode film layer, the active substance of the first negative electrode film layer includes the silicon particles and the hard carbon particles, and the active substance of the second negative electrode film layer includes the graphite particles. That is, the negative electrode film layer is divided into two layers, where the active substance of the negative electrode film layer close to the negative current collector includes a mixture of the silicon particles and the hard carbon particles, and the active substance of another negative electrode film layer far away from the negative current collector includes the graphite particles. In this way, when the lithium-ions move to the negative electrode sheet, part of the lithium-ions are first embedded into the graphite particles in the second negative electrode film layer, and the remaining lithium-ions are embedded into the first negative electrode film layer. Since part of lithium-ions are first embedded into the second negative electrode film layer, the concentration of lithium-ions moving to the first negative electrode film layer is reduced and the speed thereof becomes slow, so that there will be sufficient time for lithium-ions to get embedded into the silicon particles and the hard carbon particles, thereby reducing the accumulation of lithium-ions at the silicon particle and the nearby hard carbon particles, and thus relieving the phenomenon of uneven distribution of lithium-ion concentration, namely, reducing the lithium precipitation, improving the endurance capacity of lithium-ion battery. At the same time, since the dynamic performance of the hard carbon particle is obviously better than that of the silicon particle and graphite particle, the use of mixing the silicon particle and the hard carbon particle can effectively improve the dynamic performance of the lithium-ion battery, thereby improving the charging speed of lithium-ion battery, and solving the technical problem of the reduction of fast charging capacity of lithium-ion battery in the related technologies.

In a possible implementation, the lithium supplement agent includes a lithium metal powder and/or lithium peroxide.

In a possible implementation, a particle size of the hard carbon particle is smaller than a particle size of the silicon particle, and an outer wall of the silicon particle is wrapped by the hard carbon particle.

In a possible implementation, in the first negative electrode film layer, a D50 particle size of the silicon particle is 6µm-10µm, and a D90 particle size of the silicon particle is 18µm-22µm.

In a possible implementation, the hard carbon particle is spherical particle, and a particle size of the hard carbon particle is 0.5µm-2µm.

In a possible implementation, in the second negative electrode film layer, a D10 particle size of the graphite particle is 3µm-6µm, a D50 particle size of the graphite particle is 11µm-14µm, and a D90 particle size of the second graphite particle is more than 22µm and less than 29µm.

In a possible implementation, a ratio of the D90 particle size of the graphite particle to the D90 particle size of the silicon particle is 1.0-1.5.

In a possible implementation, a ratio of a thickness of the first negative electrode film layer to a thickness of the second negative electrode film layer is 1:9 to 9:1.

In a possible implementation, a mass ratio of the lithium supplement agent to the silicon particle is 1%-30%.

A lithium-ion battery, including a positive electrode sheet, a negative electrode sheet, a separator and an electrolyte solution, and the negative electrode sheet is the negative electrode sheet of any of the above.

### BRIEF DESCRIPTION OF DRAWINGS

FIG. 1 is a schematic diagram of a first negative electrode film layer and a second negative electrode film layer in a negative electrode sheet provided by an embodiment of the present disclosure.
FIG. 2 is a structural schematic diagram of a hard carbon particle, a silicon particle, a mixed material and a graphite particle provided by an embodiment of the present disclosure.
FIG. 3 is a flow chart of a method of preparing the negative electrode sheet provided by an embodiment of the present disclosure.

### Description of reference numbers:

100, negative current collector; 200, first negative electrode film layer; 210, hard carbon particle; 220, silicon particle; 230, mixed material; 300, second negative electrode film layer; 310, graphite particle.

### DESCRIPTION OF EMBODIMENTS

In recent years, with the explosive growth of sales of portable electronic product, lithium-ion batteries have become the power source for various devices. People's performance requirements for the lithium-ion batteries have also been further improved, and the demand for lithium-ion batteries to have a longer life is an important indicator of the lithium-ion batteries.

In related technologies, the lithium-ion battery includes a positive electrode sheet, a negative electrode sheet, a separator and an electrolyte solution; the negative electrode sheet includes a metal sheet and a functional layer covered on the metal sheet. In order to improve the energy density of lithium-ion battery, the functional layer is formed from graphite and silicon by mixing, thus being capable to improve the energy density of lithium-ion battery due to the lithium storage amount of silicon being much greater than that of graphite, thereby improving the endurance and service life of lithium-ion battery.

However, in the charging and discharging process of lithium-ion battery, due to the difference in the conductivity and lithium storage amount between silicon and silicon oxide materials and graphite materials, and at the same time, the poor electrical conductivity of silicon materials, the dynamic performance of the negative electrode sheet after mixing silicon materials and graphite materials is reduced, which leads to the reduction of the fast charging ability of lithium-ion battery, thereby affecting its charging and discharging performance under the high current charging and discharging..

Accordingly, an embodiment of the present disclosure provides a negative electrode sheet, including a negative current collector, where a first negative electrode film layer and a second negative electrode film layer are disposed successively on a surface of the negative current collector. That is, the first negative electrode film layer is attached to the surface of the negative current collector, and the second negative electrode film layer is attached to a surface of the first negative electrode film layer. An active substance of the first negative electrode film layer includes silicon particles and hard carbon particles, and an active substance of the second negative electrode film layer includes graphite particles, that is, a negative electrode film layer is divided into two layers, where the active substance of the negative electrode film layer close to the negative current collector includes a mixture of the silicon particles and the hard carbon particles; and the active substance of another negative electrode film layer away from the negative current collector includes graphite particles. In this way, when the lithium-ions move to the negative electrode sheet, part of the lithium-ions are first embedded into the graphite particles in the second negative electrode film layer, and the remaining lithium-ions are embedded into the first negative electrode film layer. Since part of lithium-ions are first embedded into the second negative electrode film layer, the concentration of lithium-ions moving to the first negative electrode film layer is reduced and the speed of such lithium-ion becomes slow, so that there will be enough time for lithium-ions to get embedded into the silicon particles and the hard carbon particles, thus reducing the accumulation density of lithium-ions at the silicon particles and nearby hard carbon particles, and thus relieving the phenomenon of uneven distribution of lithium-ion concentration, namely, reducing the lithium precipitation, and improving the endurance ability of the lithium-ion battery. At the same time, since the dynamic performance of the hard carbon particle is obviously better than that of the silicon particle and graphite particle, thus the use of mixed silicon particles and hard carbon particles can effectively improve the dynamic performance of the lithium-ion battery, thereby improving the charging speed of lithium-ion battery, and solving the technical problem in the related technologies that the fast charging capacity of lithium-ion battery is reduced.

In order to make the above purposes, characteristics and advantages of embodiments of the present application more obvious and understandable, the following clearly and comprehensively describes the technical solutions in embodiments of the present application with reference to the accompanying drawings in embodiments of the present application. Apparently, the described embodiments are merely a part rather than all embodiments of the present application. All other embodiments obtained by persons of ordinary skill in the art based on embodiments of the present application without creative effort shall fall within the protection scope of the present application.

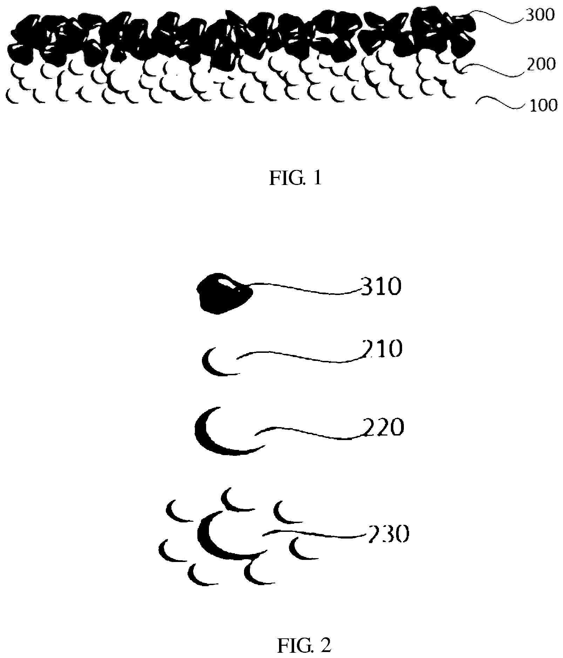

Referring to FIGS. 1 and 2, an embodiment of present disclosure provides a negative electrode sheet, including a negative current collector 100, a first negative electrode film layer 200 is attached to a surface of a negative current collector 100; and an active substance of the first negative electrode film layer 200 includes silicon particles 220 and hard carbon particles 210; a second negative electrode film layer 300 is attached to a surface of the first negative electrode film layer 200, and an active substance of the second negative electrode film layer 300 includes graphite particles 310.

Where, the negative current collector 100 may be a copper foil, which mainly plays a conductive role and acts as a carrier of the negative electrode film layer, and a thickness of the copper foil may be 4-15µm. For example, a thickness of the copper foil may be 4µm, 7µm, 11µm or 15µm. Where, the copper foil may be one of a homogeneous copper foil, a porous copper foil, or a copper foil with a carbon coating.

Exemplarily, the first negative electrode film layer 200 may be a film layer obtained by coating a slurry of the first negative electrode film layer 200 on a surface of the negative current collector 100 and drying them. Where, the slurry of the first negative electrode film layer 200 may include NMP (1-methyl-2-pyrrolidone) solvent, that is, the silicon particles 220 and the hard carbon particles 210 are evenly mixed by the NMP solvent to form a slurry, and the slurry is coated on the copper foil, thereby forming the first negative electrode film layer 200 that has mixed active substances of silicon particles 220 and the hard carbon particles 210.

Exemplarily, the second negative electrode film layer 300 may be a film layer obtained by coating a slurry of the second negative electrode film layer 300 on a surface of the first negative electrode film layer 200 and drying them. Where, the slurry of second negative electrode film layer 300 may include NMP solvent, that is, the graphite particles 310 are formed into a slurry by the NMP solvent, and the slurry is coated on a copper foil, thereby forming the second negative electrode film layer 300 that has an active substance of the graphite particles 310.

It should be noted that the hard carbon particle 210 refers to carbon that is difficult to be graphitized and is the thermal decomposition product of high molecular polymer.

Exemplarily, the graphite particle 310 may include one or more of artificial graphite, natural graphite, mesophase carbon microsphere, soft carbon, hard carbon, and organic polymer compound carbon. The silicon particle 220 may include one or more of silicon oxide material, silicon carbide material, and nano-silicon material.

For the negative electrode sheet provided in this embodiment, the negative electrode film layer is divided into two layers, where the active substance of the negative electrode film layer close to the negative current collector 100 includes a mixture of the silicon particle 220 and the hard carbon particle 210. The active substance of another negative electrode film layer away from the negative current collector 100 includes the graphite particle 310. Accordingly, when the lithium-ions move to the negative electrode sheet, part of the lithium-ions are first embedded into the graphite particles 310 in the second negative electrode film layer 300, and the remaining lithium-ions are embedded into the first negative electrode film layer 200. Since part of lithium-ions are first embedded into the second negative electrode film layer 300, the concentration of lithium-ions moving to the first negative electrode film layer 200 is reduced and the speed of them becomes slow, so that there will be enough time for lithium-ions to get embedded in the silicon particles 220 and the hard carbon particles 210, thus reducing the accumulation of lithium-ions at the silicon particles 220 and the hard carbon particles 210, and relieving the phenomenon of uneven distribution of lithium-ion concentration. That is, the lithium precipitation is reduced, and the endurance capacity of the lithium-ion battery is improved. At the same time, since the dynamic performance of the hard carbon particle 210 is obviously better than that of the silicon particle 220 and graphite particle 310, thus the use of mixing the silicon particle 220 and the hard carbon particle 210 can effectively improve the dynamic performance of the lithium-ion battery, thereby improving the charging speed of lithium-ion battery, and solving the technical problem in the related technologies that fast charging capacity of lithium-ion battery is reduced.

In some embodiments, a particle size of the hard carbon particle 210 is smaller than a particle size of silicon particle 220.

Exemplarily, a periphery of the silicon particle 220 may be wrapped by the hard carbon particles 210, that is, the hard carbon particles 210 surround the silicon particle 220 and are attached to the periphery of the silicon particle 220, so that the silicon particle 220 can be completely wrapped or partly wrapped.

Exemplarily, a D50 particle size of the silicon particle 220 is in a range of 6µm-10µm, and a D90 particle size of the silicon particle 220 is in a range of 18µm-20µm. For example, the D50 of the silicon particle 220 may be 6µm, 8µm, or 10µm; the D90 of the silicon particle 220 may be 18µm, 19µm, or 20µm. A particle size of the hard carbon particle 210 is in a range of 0.5µm-2µm. For example, the particle size of the hard carbon particle 210 may be 0.5µm, 1.5µm, or 2µm.

Where, D50 refers to a particle size when the cumulative distribution of particle is 50%, also known as a median diameter or a median particle size. This is a typical value that represents granularity size, and the value accurately bisects the population of particles, that is, 50% of the particles exceed this value, and 50% of the particles are below this value. If D50 of a sample is equal to 6µm, it is showed that in all the particles that make up the sample, the particles larger than 6µm account for 50% and the particles smaller than 6µm also account for 50%.

D90 refers to a particle size when the cumulative distribution of particle is 90%, that is, the volume content of particles less than this particle size accounts for 90% of all particles.

In this embodiment, the combination of large-particle-size silicon particle 220 and small-particle-size hard carbon particle 210 mainly serves to further improve the dynamic performance of the negative electrode sheet. This is because that the dynamic performance of the silicon particle 220 is poor, especially the silicon particle 220 of D90, its particle size is large and its dynamic performance is poor. Therefore, using the hard carbon particles 210 to wrap around D90 silicon particle 220 can effectively enhance the dynamic performance of silicon particle 220 and improve the situation of lithium precipitation around silicon particle 220, thereby being capable of effectively increasing the charging speed of lithium-ion battery. At the same time, using small-particle-size hard carbon particle 210 can make the periphery of silicon particle 220 wrapped with more hard carbon particles 210, thereby being capable of improving the dynamic performance of silicon particle 220 more effectively. In other words, since the dynamic performance of the hard carbon particle 210 is obviously better than that of the silicon particle 220 and graphite particle 310, the lithium-ions surrounding the silicon particle 220 can be quickly embedded into the hard carbon particles 210, thus effectively improving the situation of lithium precipitation around the silicon particle 220. Therefore, the dynamic performance of the negative electrode plate is effectively improved, and the fast charging ability of the lithium-ion battery is improved, which is capable of increasing effectively the endurance and service life of lithium-ion battery.

In some embodiments, the hard carbon particle 210 may be spherical particle, the use of spherical particle in the hard carbon particle 210 can make the periphery of silicon particle 220 wrapped with more hard carbon particles 210, so as to further improve the dynamic performance of the lithium-ion battery.

In some embodiments, in the first negative electrode film layer 200, a mass ratio of the silicon particle 220 may be 0.1%-30%. Exemplarily, the mass ratio of the silicon particle 220 may be 0.1%, 5%, 10%, 20% or 30%, and its specific content may be set according to the actual situation.

In some embodiments, the first negative electrode film layer 200 further includes a lithium supplement agent, for increasing the lithium-ion content in the first negative electrode film layer 200. In addition, a mass ratio between the lithium supplement agent and the silicon particle 220 may be 1%-30%, for example, the mass ratio between the lithium supplement agent and the silicon particle may be 1%, 5%, 10%, 15%, 25% or 30%.

Where, it should be noted that the main reason for adding the lithium supplement agent is that the contents of embedded and de-embedded lithium ions of silicon particle 220 are not the same upon the first charging and discharging, and in general, there are more embedded lithium ions and de-embedded lithium ions (commonly known as lithium intake). After depreciation, the capacity of the lithium-ion battery is reduced after the first charging and discharging of the lithium-ion battery, resulting in decreased energy density of the lithium-ion battery. Replenishment of lithium for the first negative electrode film layer 200 containing the silicon particles 220 aims to place the lithium particles to be eaten by the silicon particles 220 in the first negative electrode film layer 200 in advance, so that the lithium eaten by the silicon particle 220 can be supplemented during the first charging and discharging, which is conducive to improving the problem of reduced capacity of lithium-ion battery.

At the same time, although the hard carbon particle 210 can improve the dynamic performance of lithium-ion battery, the initial efficiency of the hard carbon particle 210 is lower, which seriously affects the capacity of lithium-ion battery. Therefore, it is necessary to replenish lithium for the first negative electrode film layer 200 to improve the initial efficiency of the hard carbon particle 210 and then enhance the capacity of the first negative electrode film layer 200. Exemplarily, the lithium supplement agent may be lithium metal powder, such as SLMP (stabilized lithium metal powder), lithium peroxide and other lithium supplement agent.

At the same time, the lithium supplement agent is added to the first negative electrode film layer 200, that is, the lithium supplement agent is added to a layer close to the negative current collector 100, so as to avoid that the negative electrode film layer adding with the lithium supplement agent is directly in contact with the separator; instead, the negative electrode film layer is bonded with the separator by the second negative electrode film layer 300, solving the technical problem that the negative electrode sheet and the separator are not bonded each other due to the addition of lithium supplement agent.

In addition, the first negative electrode film layer 200 may further include a first conductive agent, a first binder and a first thickener; and the mass ratio of a mixed material 230, the first conductive agent, the first binder and the first thickener is 75wt%-99wt% : 0.1wt%-5wt% : 0.1wt%-5wt% : 0.5wt%-5wt%. Exemplarily, the mass ratio of the mixed material 230, the first conductive agent, the first binder and the first thickener may be 75wt% : 0.1 wt% : 0.1wt% : 0.5wt%; 85wt% : 2wt% : 3wt% : 2.5wt%; 96.9wt% : 0.5wt% : 1.3wt% : 1.3wt%; or 99wt% : 5wt% : 5wt% : 5wt%.

Exemplarily, the first conductive agent may be one or more of conductive carbon black, carbon fiber, Ketjen black, acetylene black, carbon nanotube, and graphene.

The first thickener may be sodium carboxymethyl cellulose or lithium carboxymethyl cellulose.

The first binder may be a water-based binder, for example, it may be one or more of styrene butadiene rubber, nitrile butadiene rubber, butadiene rubber, modified styrene butadiene rubber, sodium polyacrylate, water-based polyacrylonitrile copolymer or polyacrylate.

In addition, the second negative electrode film layer 300 further includes a second conductive agent, a second binder and a second thickener, and the mass ratio of the graphite particle 310, the second conductive agent, the second binder and the second thickener is 75wt%-99wt% : 0.1wt%-5wt% : 0.1wt%-5wt% : 0.5wt%-5wt%. Exemplarily, the mass ratio of the graphite particle 310, the second conductive agent, the second binder and the second thickener may be 75wt% : 0.1wt% : 0.1wt% : 0.5wt%; 85wt% : 2wt% : 3wt% : 2.52wt%; 96.9wt% : 0.5wt% : 1.3wt% : 1.3wt%; or 99wt% : 5wt% : 5wt% : 5wt%.

Exemplarily, the second conductive agent may be one or more of conductive carbon black, carbon fiber, Ketjen black, acetylene black, carbon nanotubes, and graphene.

The second thickener may be sodium carboxymethyl cellulose or lithium carboxymethyl cellulose.

The second binder may be a water-based binder, for example, it may be one or more of styrene butadiene rubber, nitrile butadiene rubber, butadiene rubber, modified styrene butadiene rubber, sodium polyacrylate, water-based polyacrylonitrile copolymer or polyacrylate.

In some embodiments, a ratio of a thickness *d1* of the first negative electrode film layer 200 to a thickness *d2* of the second negative electrode film layer 300 may be in a range of 1:9-9:1. Exemplarily, a ratio of the thickness *d1* of the first negative electrode film layer 200 to the thickness *d2* of the second negative electrode film layer 300 may be 1:9, 5:5 or 9:1; the thickness *d1* of the first negative electrode film layer 200 may be 44µm; and the thickness *d2* of the second negative electrode film layer 300 may be 56µm.

In some embodiments, in the second negative electrode film layer 300, a ratio of D90 of graphite particles 310 to D90 of silicon particles 220 is 1.0-1.5. Based on this, it can be seen that the particle size of graphite particles 310 is larger, and by selecting graphite particle 310 as a larger particle, on the one hand, large particles can improve compaction; on the other hand, there can be more gaps between the large particles of graphite particle 310, which can improve the porosity of the negative electrode sheet, and then improve the liquid retention amount of the battery cell, reduce the surface polarization of the negative electrode sheet, and enhance the dynamic performance of the negative electrode sheet, which further improves the endurance and service life of the lithium-ion battery.

An embodiment of the present disclosure further provides a lithium-ion battery including a positive electrode sheet, a negative electrode sheet, a separator and an electrolyte solution, in which the negative electrode sheet is the negative electrode sheet as described in above embodiments.

For the lithium-ion battery provided in this embodiment, the first negative electrode film layer 200 and the second negative electrode film layer 300 are disposed successively on the surface of the negative current collector, that is, the first negative electrode film layer 200 is attached to the surface of the negative current collector 100, and the second negative electrode film layer 300 is attached to the surface of the first negative electrode film layer 200. The active substance of the first negative electrode film layer 200 includes the silicon particle 220 and the hard carbon particle 210, and the active substance of the second negative electrode film layer 300 includes the graphite particle 310. That is, the negative electrode film layer is divided into two layers, where the active substance of the negative electrode film layer close to the negative current collector includes a mixture of the silicon particle 220 and the hard carbon particle 210, and the active substance of another negative electrode film layer away from the negative current collector 100 includes the graphite particle 310. Therefore, when the lithium-ions move to the negative electrode sheet, part of the lithium-ions are first embedded into the graphite particles in the second negative electrode film layer 300, and the remaining lithium-ions are embedded into the first negative electrode film layer 200. Since part of lithium-ions are embedded into the second negative electrode film layer 300 firstly, the concentration of lithium-ions moving to the first negative electrode film layer 200 is reduced and the speed of them becomes slow, so that there will be enough time for lithium-ions to get embedded into the silicon particles and the hard carbon particles, thereby reducing the accumulation of lithium-ions at the silicon particles 220 and adjacent hard carbon particles 210, and then relieving the phenomenon of uneven distribution of lithium-ion concentration, that is, reducing the lithium precipitation, and improving the endurance capacity of lithium-ion battery. At the same time, since the dynamic performance of the hard carbon particle 210 is obviously better than that of the silicon particle 220 and graphite particle 310, the use of mixed the silicon particle 220 and the hard carbon particle 210 can effectively improve the dynamic performance of the lithium-ion battery, thereby improving the charging speed of lithium-ion battery, and solving the technical problem in the related technologies that the fast charging capacity of lithium-ion is reduced.

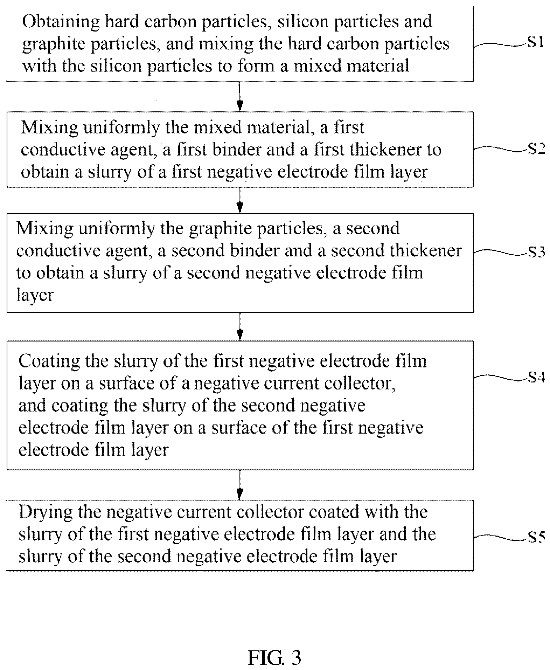

As shown in FIG. 3, an embodiment of the present disclosure further provides a method for preparing a negative electrode sheet, including:
S1: obtaining hard carbon particles 210, silicon particles 220 and graphite particles 310, and mixing the hard carbon particles 210 with the silicon particles 220 to form a mixed material 230;
S2: mixing uniformly the mixed material 230, a first conductive agent, a first binder and a first thickener to obtain a slurry of the first negative electrode film layer 200;
S3: mixing uniformly the graphite particles 310, a second conductive agent, a second binder and a second thickener to obtain a slurry of the second negative electrode film layer 300;
S4: coating the slurry of the first negative electrode film layer 200 on a surface of the negative current collector 100, and coating the slurry of the second negative electrode film layer 300 on a surface of the first negative electrode film layer 200;
S5: drying the negative current collector 100 coated with the slurry of the first negative electrode film layer 200 and the slurry of the second negative electrode film layer 300.

It should be noted that the above preparation methods may be carried out in the above order, and the above order may also be exchanged according to actual needs.

In some embodiments, the method further includes baking the negative electrode sheet at 80°C-100°C for a certain time, rolling the negative electrode sheet, and placing the rolled negative electrode sheet at 100°C-120°C, and baking for a certain time to obtain the negative electrode sheet.

In order to better explain a negative electrode sheet, a lithium-ion battery, and a method for preparing thereof, the following will provide a detailed explanation in combination with comparative examples and examples.

### Example 1

### I. Preparation of a negative electrode sheet

Hard carbon particles 210, silicon particles 220 and graphite particles 310 are obtained, and the hard carbon particles 210 are mixed with the silicon particles 220 to form a mixed material 230.

Exemplarily, a certain amount of graphite particles 310 and silicon particles 220 are obtained, where a particle size of the hard carbon particle 210 is 1µm; a D50 particle size of the silicon particle is 7µm, a D90 particle size of the silicon particle is 19µm; a D10 particle size of the graphite particle 310 is 6µm, a D50 particle size of the graphite particle 310 is 12µm, and a D90 particle size of the graphite particle 310 is 25µm.

The hard carbon particles 210 and the silicon particles 220 are taken at a mass ratio of 95:5, and the two are mixed to obtain the mixed material 230.

### 2. Slurry preparation

Preparation of the slurry of the first negative electrode film layer 200: the mixed material 230, the first conductive agent, the first binder and the first thickener are mixed uniformly to obtain the slurry of the first negative electrode film layer 200.

Exemplarily, the mixed material 230, the first conductive agent, the first binder and the first thickener are added to an agitating tank at a mass ratio of 96.9wt% : 0.5wt% : 1.3wt% : 1.3wt%. The above ratio is a mass ratio of dry material. At the same time, a certain amount of SLMP (stabilized lithium metal powder) is added to the above materials, where the addition amount of SLMP (stabilized lithium metal powder) is 10% of the content of silicon particles 220. The slurry of the first negative electrode film layer 200 is prepared with the NMP solvent and a solid content of the slurry is 42%. Meanwhile, in this example, the first conductive agent may be conductive carbon black, the first thickener may be sodium carboxymethyl cellulose, the first binder may be water-emulsion styrene butadiene rubber, and the hard carbon particle 210 may be artificial graphite.

Preparation of the slurry of the second negative electrode film layer 300: the graphite particles 310, the second conductive agent, the second binder and the second thickener are mixed uniformly to obtain the slurry of the second negative electrode film layer 300.

The graphite particles 310, the second conductive agent, the second thickener and the second binder are added to an agitating tank at a mass ratio of 96.9wt% : 0.5wt% : 1.3wt% : 1.3wt%, and the slurry of the second negative electrode film layer 300 is prepared with NMP solvent. The above ratio is a mass ratio of dry material, and the solid content of the slurry was 42%. Meanwhile, the second conductive agent in this embodiment may be conductive carbon black, the second thickener may be sodium carboxymethyl cellulose, the second binder may be water-emulsion styrene butadiene rubber, and the hard carbon particle 210 may be artificial graphite.

### 3. Negative electrode sheet preparation

The slurry of first negative electrode film layer 200 is coated on a surface of negative current collector 100, and the slurry of the second negative electrode film layer 300 is coated on a surface of the slurry of first negative electrode film layer 200; and the negative current collector 100 coated with the slurry of the first negative electrode film layer 200 and the slurry of the second negative electrode film layer 300 is dried.

Exemplarily, the slurry of the first negative electrode film layer 200 with silicon particles is coated on the surface of the negative current collector 100 by a coater, and the second negative electrode film layer 300 containing pure graphite particles 310 and no silicon particles is coated on the surface of the slurry of the first negative electrode film layer 200. Then, it is dried in a 5-section oven, where the temperatures of respective sections of oven are 60°C, 80°C, 110°C, 110°C, and 100°C, respectively. After drying, the thickness of the second negative electrode film layer 300 may be 55µm, and the thickness of the second negative electrode film layer 300 may be 55µm, so that a ratio of the thickness of the first negative electrode film layer 200 to a thickness of the second negative electrode film layer 300 is 5:5. The double-layer film layer on the other side of the negative current collector 100 is completed by repeated coating, so that the surfaces of both sides of the negative current collector 100 are both coated with a double-layer negative electrode film layer. A roller press is used for pressure treatment, so that the compaction density of the negative electrode sheet may be 1.75g/cm², and the preparation of the negative electrode sheet is completed.

In addition, before rolling, after the negative electrode sheet is baked at 80°C-100°C for a certain time, the residual NMP solvent in the negative electrode sheet can be fully volatilized in this process, which can improve the porosity of the negative electrode sheet and enhance the dynamic performance of the negative electrode sheet. Then, the negative electrode sheet is rolled, and the rolled negative electrode sheet is placed at 100-120°C and baked for another certain time to obtain the negative electrode sheet.

### II. Preparation of a positive electrode plate

Using lithium cobaltate as a positive active material, the positive active material, a conductive agent and a thickener are added to an agitating tank at a mass ratio of 97.2 : 1.5 : 1.3; and NMP (1-methyl2-pyrrolidone) solvent is added to stir fully, followed by subjecting the mixed slurry to pass through a sieve, and finally obtaining the positive electrode slurry. Where, the solid content of the positive electrode slurry is 70% to 75%; and then the slurry is coated on a positive current collector by a coater, in which the positive current collector may be an aluminum foil, and dried at 120°C, that is, the positive electrode sheet is obtained.

### III. Assembling of a battery cell

The above prepared negative electrode sheet and positive electrode sheet and a separator are wound together to form a rolled core, packaged with an aluminum-plastic film and baked to remove the water, followed by injecting an electrolyte solution, hot pressing, and performing formation, obtaining the battery cell.

### Example 2

This example differs from Example 1 in that: the addition amount of SLMP (stabilized lithium metal powder) in the first negative electrode film layer 200 is 5% of the content of silicon particles 220.

### Example 3

This example differs from Example 1 in that: the addition amount of SLMP (stabilized lithium metal powder) in the first negative electrode film layer 200 is 20% of the content of silicon particles 220.

### Example 4

This example differs from Example 1 in that: a ratio of a content of the hard carbon particles 210 to a content of the silicon particles 220 in the first negative electrode film layer 200 is 90:10.

### Example 5

This example differs from Example 1 in that: a particle size of the hard carbon particles 210 in the first negative electrode film layer 200 is 2µm.

### Example 6

This example differs from Example 1 in that: in the first negative electrode film layer 200, the silicon particles 220 have a D50 particle size of 6µm, and a D90 particle size of 18µm.

### Example 7

This example differs from Example 1 in that: the graphite particles 310 have a D10 particle size of 4µm, a D50 particle size of 11µm, and a D90 particle size of 23µm.

### Example 8

This example differs from Example 1 in that: the graphite particles 310 have a D10 particle size of 4µm, a D50 particle size of 14µm, and a D90 particle size of 28µm.

### Example 9

This example differs from Example 1 in that: the lithium supplement agent is not added in the first negative electrode film layer 200.

### Comparative example 1

This example differs from Example 1 in that: the negative electrode film layer is a one-layer structure, that is, the active substance includes the silicon particle 220 and graphite particle 310, which are mixed and coated on the negative current collector 100 to form a negative electrode sheet with a single-layer negative electrode film layer. Where, for the graphite particles 310, a D10 particle size is 6µm, a D50 particle size is 12µm, a D90 particle size is 25µm.

### Comparative example 2

This example differs from Example 1 in that: the active substance of the first negative electrode film layer 200 includes the silicon particle 220 and the graphite particle 310, and the active substance of the second negative electrode film layer 300 includes the graphite particle 310, that is, the active substance of the first negative electrode film layer 200 and the second negative electrode film layer 300 both include the graphite particle 310. Where, for the graphite particles, a D10 particle size is 6µm, a D50 particle size is 12µm, a D90 particle size is 25µm.

Each battery cell prepared above is subjected to 1.2C stepped charging/0.7C discharging at 25°C, and the battery is disassembled under different numbers of cycles to confirm the lithium precipitation situation on the negative electrode surface of the battery. The disassembly results and the energy density are as follows.

**Table 1 gives a table of the main relevant parameters for Examples 1-9 and Comparative examples 1-2.**

| Item | SOOT Lithium precipitation situation | 700T Capacity retention rate /% | 700T Expansion rate /% |
|---|---|---|---|
| Example 1 | 0 | 87.04 | 9.17 |
| Example 2 | 0 | 85.52 | 9.39 |
| Example 3 | 1 | 82.65 | 9.54 |
| Example 4 | 1 | 80.47 | 10.09 |
| Example 5 | 0 | 82.98 | 9.62 |
| Example 6 | 0 | 88.52 | 9.06 |
| Example 7 | 0 | 89.92 | 8.77 |
| Example 8 | 1 | 79.47 | 11.09 |
| Example 9 | 0 | 82.36 | 9.89 |
| Comparative example 1 | 5 | 65.32 | 17.65 |
| Comparative example 2 | 4 | 69.17 | 15.31 |

In this Table, the degree of lithium precipitation on the surface of the negative electrode sheet is expressed by 0, 1, 2, 3, 4, and 5, where 0 represents no lithium precipitation; 5 represents serious lithium precipitation; 1, 2, 3, and 4 represent different degrees of lithium precipitation; and the larger the number, the more serious the degree of lithium precipitation.

As can be seen from Table 1, Examples 1 to 3 show the influence of addition amount of the lithium supplement agent in the first negative electrode film layer 200 on the lithium precipitation situation of the negative electrode sheet. That is, when the addition amount of the lithium supplement agent is 5% and 10% respectively, after the lithium-ion battery is subjected to charging and discharging for 500T (cycle), no lithium is precipitated on the surface of the negative electrode sheet; when the addition amount of the lithium supplement agent reaches 20%, after the lithium-ion battery is subjected to charging and discharging for 500T (cycle), the degree of lithium precipitation on the surface of the negative electrode sheet is 1.

At the same time, it can also be seen that the addition amount of the lithium supplement agent has a certain influence on the capacity retention rate and the expansion rate of the battery. When the addition amounts of the lithium supplement agent are 10%, 5%, and 20% respectively, after the lithium-ion battery is subjected to charging and discharging for 700T (cycle), the capacity retention rates of the lithium-ion battery are 87.04%, 85.52% and 82.65%, respectively; after the lithium-ion battery is subjected to charging and discharging for 700T (cycle), the expansion rates of lithium-ion battery are 9.17%, 9.39%, and 9.54%, respectively.

In Example 9, the addition amount of the lithium supplement agent is 0, after the lithium-ion battery is subjected to charging and discharging for 700T (cycle), the capacity retention rate of the lithium-ion battery is 82.36%; after the lithium-ion battery is subjected to charging and discharging for 700T (cycle), the expansion rate of lithium-ion battery is 9.89%.

It can be seen from the above, the capacity retention rate of lithium-ion battery can be improved by adding lithium supplement agent. However, when the lithium supplement agent is added too much, it will cause the capacity retention rate of the battery to decrease and the expansion rate to increase. Therefore, an appropriate amount of lithium supplement agent should be added in order to obtain a lithium-ion battery with excellent comprehensive performance.

It can be seen from Examples 1 and 4 that when the ratio of the content of silicon particles 220 to the content of first graphite particles 310 in the first negative electrode film layer 200 reaches 10 : 90, after the lithium-ion battery is subjected to charging and discharging for 500T (cycle), the degree of lithium precipitation on the surface of the negative electrode sheet is 1; after the lithium-ion battery is subjected to charging and discharging for 700T (cycle), the capacity retention rate of the lithium-ion battery is 80.47%; after the lithium-ion battery is subjected to charging and discharging for 700T (cycle), the expansion rate of the lithium-ion battery is 10.09%.

It can be seen that when the content of silicon particles 220 is larger, it will increase the degree of lithium precipitation on the surface of the negative electrode sheet, meanwhile, it can also reduce the capacity retention rate of lithium-ion battery, and increase the expansion rate of lithium-ion battery. Therefore, the selection of an appropriate amount of silicon particles 220 can effectively improve the comprehensive performance of the lithium-ion battery.

It can be seen from Examples 1 and 5 that when the particle size of the hard carbon particles 210 in the first negative electrode film layer 200 is larger, that is, the particle size of the hard carbon particles 210 reaches 2µm, after the lithium-ion battery is subjected to charging and discharging for 500T (cycle), the degree of the lithium precipitation on the surface of the negative electrode sheet is 0. After the lithium-ion battery is subjected to charging and discharging for 700T (cycle), the capacity retention rate of the lithium-ion battery is 82.98%; after the lithium-ion battery is subjected to charging and discharging for 700T (cycle), the expansion rate of the lithium-ion battery is 9.62%.

It can be seen that when the hard carbon particles 210 is larger, the capacity retention rate of the lithium-ion battery will be reduced, and the expansion rate of the lithium-ion battery can be increased. The reason is that when the particle size of the hard carbon particles 210 is larger, silicon particles 220 cannot be wrapped effectively, which cannot effectively improve the dynamic performance of silicon particles 220, that is, effectively improve the dynamic performance of lithium-ion battery.

It can be seen from Examples 1 and 6 that when the particle size of silicon particles 220 in the first negative electrode film layer 200 is smaller, that is, the D50 particle size of silicon particles 220 reaches 6µm, and the D90 particle size of silicon particles 220 reaches 18µm, namely, when the particle size of the silicon particles 220 decreases correspondingly, after the lithium-ion battery is subjected to charging and discharging for 500T (cycle), the degree of the lithium precipitation on the surface of the negative electrode sheet is 0. After the lithium-ion battery is subjected to charging and discharging for 700T (cycle), the capacity retention rate of lithium-ion battery is 88.52%; and after the lithium-ion battery is subjected to charging and discharging for 700T (cycle), the expansion rate of lithium-ion battery is 9.06%.

It can be seen that when the particle size of the silicon particles 220 is appropriately reduced, there is no significant change in the lithium precipitation situation and volume expansion rate of the lithium-ion battery, but there is a certain rise in the capacity retention rate of the lithium-ion battery. Therefore, reducing the particle size of the silicon particles 220 appropriately can improve the capacity retention rate of the lithium-ion battery under the premise of keeping its lithium precipitation situation and volume expansion rate basically unchanged.

It can be seen from Examples 1 and 7 that when the particle size of carbon particles in the second negative electrode film layer 300 is smaller, that is, when the D10 particle size of graphite particles reaches 4µm, the D50 particle size of graphite particles reaches 11µm and the D90 particle size of graphite particles reaches 23µm, after the lithium-ion battery is subjected to charging and discharging for 500T (cycle), the degree of lithium precipitation on the surface of the negative electrode sheet is 0. After the lithium-ion battery is subjected to charging and discharging for 700T (cycle), the capacity retention rate of lithium-ion battery is 89.92%; after the lithium-ion battery is subjected to charging and discharging for 700T (cycle), the expansion rate of lithium-ion battery is 8.77%.

It can be seen that when the particle size of graphite particles 310 is properly reduced, the lithium precipitation situation and the volume expansion rate of the lithium-ion battery both have no significant change, but there is a certain rise in the capacity retention rate of the lithium-ion battery. Therefore, reducing the particle size of graphite particles 310 appropriately can improve the capacity retention rate of the lithium-ion battery under the premise of keeping its lithium precipitation situation and volume expansion rate basically unchanged.

It can be seen from Examples 1 and 8 that when the particle size of carbon particles in the second negative electrode film layer 300 is larger, that is, when the D10 particle size of graphite particles reaches 4µm, the D50 particle size of graphite particles reaches 14µm and the D90 particle size of graphite particles reaches 28µm, after the lithium-ion battery is subjected to charging and discharging for 500T (cycle), the degree of lithium precipitation on the surface of the negative electrode sheet is 0. After the lithium-ion battery is subjected to charging and discharging for 700T (cycle), the capacity retention rate of lithium-ion battery is 79.47%; after the lithium-ion battery is subjected to charging and discharging for 700T (cycle), the expansion rate of lithium-ion battery is 11.09%.

It can be seen that when the particle size of the carbon particles in the second negative electrode film layer 300 is larger, the capacity retention rate of the lithium-ion battery shows a relatively significant downward trend, and the volume expansion rate also shows a relatively significant increasing trend. Therefore, although the graphite particles 310 in the second negative electrode film layer 300 have a larger particle size, they can improve the porosity of the negative electrode sheet, thereby improving the liquid retention of the battery cell, reducing the surface polarization of the negative electrode sheet, improving the dynamic performance of the negative electrode sheet, and further improving the endurance and service life of lithium-ion battery. However, when the particle size of the graphite particles in the second negative electrode film layer 300 is too large, it will lead to a significant reduction in the number of carbon particles in the second negative electrode film layer 300, resulting in a significant reduction in the amount of lithium-ions embedded into the second negative electrode film layer 300, and accumulation of more lithium-ions near the silicon particles 220, thereby affecting the capacity retention rate and expansion rate of lithium-ion battery.

From Comparative example 1, it can be seen that when that the slurry of mixed silicon particles 220 and graphite particles 310 is coated on the negative current collector to form a negative electrode film layer, after its lithium-ion battery is subjected to charging and discharging for 500T (cycle), the degree of lithium precipitation on the surface of the negative electrode sheet is 5; after the lithium-ion battery is subjected to charging and discharging for 700T (cycle), the capacity retention rate of lithium-ion battery is 65.32%; and after the lithium-ion battery is subjected to charging and discharging for 700T (cycle), the expansion rate of lithium-ion battery is 17.65%.

Thus, by comparing Examples 1 to 7 with Comparative example 1, it can be seen that using the structure of examples of the present disclosure can effectively reduce the degree of lithium-ion precipitation, significantly improve the capacity retention rate of lithium-ion battery, and reduce the expansion rate of lithium-ion battery.

From Comparative example 2, it can be seen that when the graphite particles 310 are selected for use in the first negative electrode film layer 200 and the second negative electrode film layer 300, and the graphite particles 310 are not screened, after the lithium-ion battery is subjected to charging and discharging for 500T (cycle), the degree of lithium precipitation on the surface of the negative electrode sheet is 4; after the lithium-ion battery is subjected to charging and discharging for 700T (cycle), the capacity retention rate of lithium-ion battery is 69.17%; and after the lithium-ion battery is subjected to charging and discharging for 700T (cycle), the expansion rate of lithium-ion battery is 15.31%.

Therefore, compared with Comparative examples 2 and 1, although the comprehensive performance of lithium-ion battery can be improved to a certain extent by dividing the negative electrode film layer into two layers, the lithium precipitation situation is still relatively serious, meanwhile the capacity retention rate of lithium-ion battery is still lower, and the expansion rate of lithium-ion battery is larger.

Further, by comparing Examples 1 to 9 with Comparative example 2, it can be seen that using the structure of embodiments of the present disclosure can effectively reduce the degree of lithium-ion precipitation, significantly improve the capacity retention rate of lithium-ion battery, and reduce the expansion rate of lithium-ion battery. That is, selecting hard carbon particles 210 and silicon particles 220 as the active substance in the first negative electrode film layer 200, can more effectively improve the overall dynamic performance of the negative electrode sheet, thus further significantly improving the endurance and service life of lithium-ion battery.

In the description of embodiments of the present disclosure, it is to be understood that the orientation or position relationship indicated by the terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "circumferential" etc. is based on the orientation or position relationship shown in the accompanying drawings and only to facilitate the description of embodiments of the present disclosure and simplify the description, rather than indicating or implying that the device or component referred to must have a specific orientation or be constructed and operated in a specific orientation, and therefore cannot be interpreted as a limitation to embodiments of the present disclosure.

In addition, the terms "first" and "second" are only used for the purpose of description, and should not be understood as indicating or implying relative importance, or implicitly specifying the number of the indicated technical features. Therefore, the features defined by "first", "second" and "third" may explicitly or implicitly include at least one of the features. In the description of embodiments of the present disclosure, the meaning of "more" is at least two, such as two, three, etc., unless otherwise expressly and specifically limited.

In embodiments of the present disclosure, unless otherwise expressly specified and limited, the terms "mounted", "linked", "connected", "fixed", etc. shall be understood in a broad sense. For example, it may be fixed connection, detachable connection, or integrated connection; mechanical connection, or electric connection; direct connection, indirect connection by an intermediate medium, the communication between the interiors of two components, or an interaction relationship between two components, unless otherwise expressly limited. For persons of ordinary skill in the art, the specific meanings of the aforesaid terms in embodiments of the present disclosure may be understood based on specific situations.

In embodiments of the present disclosure, unless otherwise expressly specified and limited, the first feature "above" or "below" the second feature may mean a direct contact between the first and second features, or an indirect contact between the first and second features through an intermediate medium. Moreover, the first feature being "above", "over" and "on" the second feature may mean that the first feature is directly above or diagonally above the second feature, or simply indicate that the first feature is higher than the second feature in a horizontal height. The first feature "below", "under", and "beneath" the second feature may mean that the first feature is directly below or diagonally below the second feature, or simply indicate that the first feature is below than the second feature in a horizontal height.

In the description of this specification, reference to the description of the terms "an embodiment", "some embodiments", "examples", "specific examples", or "some examples", etc. means that specific features, structures, materials, or characteristics described in conjunction with this embodiment or example are included in at least one embodiment or example of the embodiments of the present disclosure. In this specification, the schematic description of the aforesaid terms needs not be directed to the same embodiment or example. Moreover, the specific features, structures, materials or characteristics described may be combined in a suitable manner in any one or more embodiments or examples. In addition, without contradicting with each other, persons of ordinary skill in the art may integrate and combine different embodiments or examples and characteristics of different embodiments or examples described in this specification.

Notwithstanding that embodiments of the present disclosure have been shown and described above, it may be understood that the aforesaid embodiments are exemplary and cannot be construed as a limitation of embodiments of the present disclosure, and persons of ordinary skill in the art may alter, change, replace, and modify the aforesaid embodiments within the scope of embodiments of the present disclosure.

## Claims

1. A negative electrode sheet, comprising:
a negative current collector;
a first negative electrode film layer attached to a surface of the negative current collector, an active substance of the first negative electrode film layer comprising silicon particles and hard carbon particles, and the first negative electrode film layer comprising a lithium supplement agent;
a second negative electrode film layer attached to a surface of the first negative electrode film layer, an active substance of the second negative electrode film layer comprising graphite particles.

2. The negative electrode sheet according to claim 1, wherein the lithium supplement agent comprises a lithium metal powder and/or lithium peroxide.

3. The negative electrode sheet according to claim 1, wherein a particle size of the hard carbon particle is smaller than a particle size of the silicon particle, and an outer wall of the silicon particle is wrapped with the hard carbon particles.

4. The negative electrode sheet according to claim 1, wherein in the first negative electrode film layer, a D50 particle size of the silicon particle is 6µm-10µm, and a D90 particle size of the silicon particle is 18µm-22µm.

5. The negative electrode sheet according to claim 1, wherein the hard carbon particle is spherical particle, and a particle size of the hard carbon particle is 0.5µm-2µm.

6. The negative electrode sheet according to claim 1, wherein in the second negative electrode film layer, a D10 particle size of the graphite particle is 3µm-6µm, a D50 particle size of the graphite particle is 11µm-14µm, and a D90 particle size of the graphite particle is more than 22µm and less than 29µm.

7. The negative electrode sheet according to any one of claims 1-6, wherein a ratio of the D90 particle size of the graphite particle to the D90 particle size of the silicon particle is 1.0-1.5.

8. The negative electrode sheet according to claim 1, wherein a ratio of a thickness of the first negative electrode film layer to a thickness of the second negative electrode film layer is 1:9 to 9:1.

9. The negative electrode sheet according to claim 2, wherein a mass ratio of the lithium supplement agent to the silicon particles is 1%-30%.

10. A lithium-ion battery, comprising a positive electrode sheet, a negative electrode sheet, a separator and an electrolyte solution, wherein the negative electrode sheet is the negative electrode sheet according to any one of claims 1-9.
